# FASCICULE DE BREVET EUROPEEN

(11) **EP 2 278 290 B1**
(45) Date de publication et mention de la délivrance du brevet: **23.08.2017**
(21) Numéro de dépôt: 09166363.3
(22) Date de dépôt: 24.07.2009
(51) Int. Cl.: G01K 1/06, G01K 5/70, G01D 5/347

(54) **Procédé de formation sur une surface de repères destinés à être détectés par voie optique et en réflexion, et thermomètre correspondant**
Verfahren zur Ausbildung von durch Reflexion bestimmten optischen Markierungen auf einer Oberfläche, und entsprechendes Thermometer
Method for making marks on a surface to be detected by optical means and in reflection, and corresponding thermometer

(43) Date de publication de la demande: 26.01.2011
(73) Titulaire: Rüeger S.A., 1023 Crissier (CH)
(72) Inventeur: Rüeger, Bernard, CH-1173 Féchy/VD (CH)
(74) Mandataire: Ganguillet, Cyril

(56) Documents cités:
- GB-A- 2 432 662
- US-A1- 2007 131 853

## Description

### Domaine technique

La présente invention concerne un procédé de formation sur une surface de repères destinés à être détectés par voie optique et en réflexion. L'invention trouve notamment une application privilégiée dans le domaine des thermomètres pour lesquels une détection de la position de l'afficheur relativement au cadran est nécessaire. Des exemples de repères détectables par voie optique ont notamment été décrits dans les demandes de brevet GB 2 432 662 A et US 2007/0131853 A1.

### Etat de la technique

Dans le domaine des thermomètres, la lecture de la température se fait généralement en observant la position d'un élément d'affichage mobile par rapport à un cadran fixe. Le déplacement de l'élément mobile est directement lié aux variations de température mesurées par un moyen de mesure de température. Selon le modèle, l'élément mobile peut être une aiguille, un disque ou un tambour. La lecture visuelle de la température s'opère en relevant la graduation exprimée en unité de température qui se trouve face à un repère porté selon le modèle soit par l'élément fixe, soit par l'élément mobile. Dans le cas des thermomètres à aiguille, l'aiguille est l'élément mobile et sa pointe positionnée face aux graduations du cadran fixe indique la température mesurée. En revanche, dans le cas des thermomètres à disque ou à tambour, le disque ou le tambour constitue l'élément mobile et peut porter une graduation pour indiquer la température.

Toutefois, dans certaines applications, l'utilisateur n'a pas toujours accès au thermomètre qui est en contact avec la source de chaleur. Il ne peut donc pas effectuer une lecture visuelle de la température sur le thermomètre. Par ailleurs, certaines applications nécessitent également un contrôle en continu de la température d'un milieu pour éviter le dépassement d'une température limite et assurer le bon déroulement d'un processus donné. L'utilisateur ne peut donc pas se contenter d'une simple lecture visuelle pour réaliser ce contrôle. Les applications susmentionnées peuvent se situer à la fois dans le domaine du grand public, notamment pour des thermomètres utilisés lors de la cuisson des aliments, ou dans des domaines industriels, notamment lors de la surveillance de processus chimiques ou pétrochimiques. Pour assurer un bon contrôle des températures de ces processus domestiques ou industriels, il faut donc parfois utiliser des dispositifs de mesure de température et d'alarme aptes à compléter les thermomètres usuels. A cet effet, une solution consiste notamment à détecter, dans les thermomètres existants, la position de l'élément d'affichage par rapport au cadran en utilisant des capteurs de position. Ces capteurs sont positionnés à l'extérieur du thermomètre et mesurent le déplacement relatif de l'élément d'affichage par rapport au cadran. Dans l'une des solutions techniques envisageables, les capteurs envoient un faisceau de lumière, dans le visible ou dans l'infrarouge par exemple, en direction de repères réfléchissants disposés sur l'élément d'affichage et sur le cadran et détectent les signaux réfléchis par ces repères. En fonction des signaux reçus par les différents capteurs, une unité de calcul est capable d'évaluer avec précision la position relative de l'élément d'affichage par rapport au cadran et donc d'en déduire la température mesurée.

Le problème dans ce type de dispositifs de détection de position est la difficulté de détecter avec précision la position de chacun des repères. Cette difficulté est liée en grande partie aux procédés utilisés jusqu'à présent pour former les repères réfléchissants sur la surface de l'élément mobile et du cadran. Les procédés existants s'avèrent en général incapables de réaliser des repères ayant une forme précise, reproductible et possédant un contraste suffisant par rapport aux zones de surface qui les entourent, notamment si les repères sont appliqués sur du verre minéral.

En effet, actuellement, les repères réfléchissants sont souvent appliqués sur une surface au moyen d'une impression à chaud. Cette technique n'est toutefois pas applicable sur les surfaces constituées d'un matériau à haute conductivité thermique comme l'aluminium, le cuivre ou le verre. Par ailleurs, on observe que les bords des couches métallisées déposées sur les surfaces ne sont pas nets du fait de la séparation par arrachage des parties activées du reste du complexe. Ce manque de netteté empêche de réaliser une détection précise de la position des repères, et, in fine de l'élément mobile. Il faut également noter que, du fait que la surface à marquer possède des propriétés optiques variables selon les zones couvertes par les couches métallisées, elle n'est pas toujours clairement identifiable par les capteurs optiques. Or, une identification précise de chacun des repères implique que la couleur des zones de surface entourant les couches métallisées soit homogène et nettement contrastée par rapport à celle desdites couches. Ce contraste permet d'identifier sans risque d'erreur le positionnement des repères réfléchissants.

### Divulgation de l'invention

Il est donc nécessaire de proposer un procédé permettant d'appliquer des repères réfléchissants sur une surface dans lequel chacun des repères possède des bords nets et est clairement identifiable par les capteurs optiques.

La Demanderesse a donc eu l'idée d'imprimer à froid les repères réfléchissants en utilisant des procédés d'impression adaptés à la surface à marquer et permettant une meilleure définition des bords des repères et un meilleur contraste du point de vue optique.

A cet effet, conformément à l'invention, il est proposé un procédé de formation de repères destinés à être détectés par voie optique et en réflexion, comprenant les étapes suivantes:
a) dépôt par impression sur une surface d'une première couche, dite couche masque, selon un premier motif constitué d'une bande pleine à l'intérieur duquel sont formées une série de zones discrètes, régulièrement espacées, libres d'impression, lesdites zones formant un second motif, ladite couche masque étant sensiblement exempte de particules à haute réflectivité afin d'avoir un taux de réflectivité le plus bas possible et possédant une couleur sensiblement homogène,
   d'avoir un taux de réflectivité le plus bas possible et possédant une couleur sensiblement homogène,
b) dépôt par impression sur la surface d'une seconde couche, dite couche réfléchissante, selon un motif sensiblement identique au second motif, ladite couche réfléchissante comprenant des particules à haute réflectivité et étant exempte d'agents durcisseurs et/ou de diluant.
D'autres configurations possibles de l'invention sont définies dans les revendications 2 à 12.

Ainsi configuré, le procédé selon l'invention permet de former des repères réfléchissants dont les contours sont clairement définis et dont les caractéristiques optiques, notamment en réflexion, se démarquent nettement de celles des zones de surface qui les entourent. En outre, il est possible d'utiliser des dispositifs d'impression et des encres spécialement adaptés aux surfaces à imprimer, améliorant ainsi le rendu d'impression et donc la précision de la lecture optique.

Un autre objet de la présente invention concerne un thermomètre selon la revendication 13.

Une autre configuration possible de l'invention est définie dans la revendication 14.

### Brève description des dessins

D'autres avantages et caractéristiques de la présente invention seront mieux compris à la lecture d'un mode particulier de réalisation de l'invention et en référence aux dessins dans lesquels:
- la figure 1 représente une vue schématique, latérale et en coupe d'un thermomètre selon l'invention sur lequel est fixé de manière amovible un dispositif de détection optique;
- la figure 2 représente une vue en plan de dessus de la face verso du thermomètre représenté à la figure 1;
- la figure 3 représente une vue schématique, latérale et en coupe d'une première variante d'une plaque de verre utilisable dans le thermomètre représenté à la figure 1;
- la figure 4 représente une vue schématique, latérale et en coupe d'une deuxième variante d'une plaque de verre utilisable dans le thermomètre représenté à la figure 1;
- la figure 5 représente une vue schématique, latérale et en coupe d'une troisième variante d'une plaque de verre utilisable dans le thermomètre représenté à la figure 1;

### Description détaillée d'un mode d'exécution de l'invention

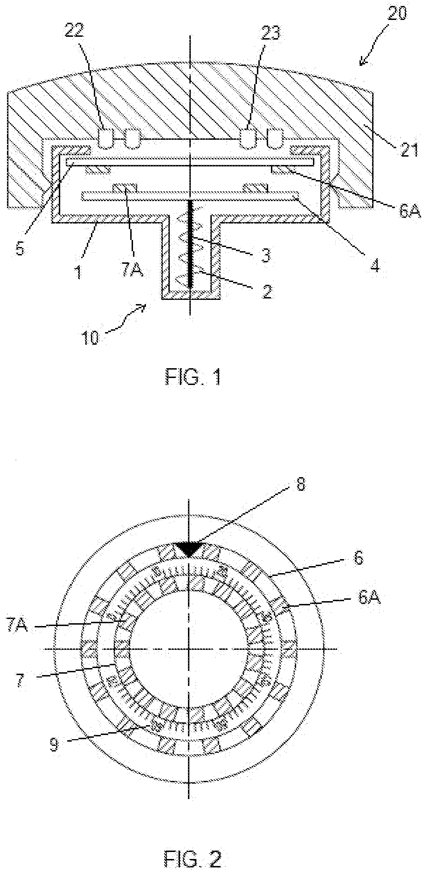

En référence à la figure 1, il est représenté un thermomètre 10 selon l'invention constitué d'un boîtier 1 en forme de cylindre plat dans sa partie supérieure et logeant dans sa partie inférieure un capteur de température 2. Dans la version représentée, ce capteur 2 est formé d'une lame bimétallique enroulée en spirale et fixée à une tige centrale 3. La lame bimétallique 2 comporte deux bandes de métaux différents dont la dilatation différentielle sous l'effet de la température assure la rotation de la tige 3 en proportion des variations de température. D'autres types de capteurs pourront être utilisés en lieu et place de cette lame bimétallique du moment qu'ils soient susceptibles de se déformer sous l'effet de la température et qu'une telle déformation produise une rotation proportionnelle de la tige centrale. La tige centrale 3 est fixée à son extrémité supérieure à un disque indicateur 4 lequel se déplace angulairement du fait de la rotation de la tige 3. Une plaque de verre 5 vient recouvrir une ouverture circulaire aménagée dans la paroi supérieure du boîtier 1.

Une première série de repères réfléchissants 6A a été formée sur la face interne de la plaque de verre 5. Tels que représentés sur la Figure 2, ces repères 6A forment des secteurs angulaires sensiblement constants et régulièrement espacés sur une première couronne 6 centrée sur la tige 3. Une deuxième série de repères réfléchissants 7A a été formée sur la face supérieure du disque indicateur 4. Ces repères 7A forment des secteurs angulaires sensiblement constants et régulièrement espacés sur une deuxième couronne 7 centrée sur la tige 3. La position des repères réflecteurs 6A et 7A respectivement sur la face de la plaque de verre 5 dirigée vers le disque indicateur 4 et sur la face du disque indicateur 4 dirigée vers la plaque de verre 5 présente l'avantage de réduire l'écart vertical existant entre ces deux repères. Cet écart réduit diminue en effet le risque d'une perturbation par l'espace environnant du signal réfléchi par le repère 7A en réponse à un signal lumineux incident qui viendrait de l'extérieur et qui aurait d'abord traversé la plaque de verre 5. De ce fait, dans cette situation, une comparaison entre les signaux réfléchis par les repères 6A et 7A s'avère adaptée pour déduire la position du disque 4 par rapport à la plaque 5 comme nous le verrons dans la suite de ce descriptif. En complément de ces repères réfléchissants 6A et 7A, lesquels permettent une lecture optique de la position du disque indicateur 4 par rapport à la plaque de verre 5, il est également envisageable d'adjoindre un dispositif d'affichage classique de la température. Tel que représenté sur la Figure 2, ce dispositif d'affichage peut être constitué par exemple d'un pointeur 8 intégré à la plaque de verre 5 devant lequel défilent des graduations 9 portées par le disque indicateur 4.

Pour pouvoir détecter de manière optique la position des repères mobiles 7A relativement à la position des repères fixes 6A, il est nécessaire d'équiper le thermomètre 10 d'un dispositif de détection optique 20 lequel pourra se fixer de manière amovible sur le boîtier 1 du thermomètre 10. Ce dispositif 20 sera constitué de manière globale d'un boîtier 21 recouvrant partiellement ou totalement la partie supérieure du thermomètre 10, des capteurs optiques 22 et 23 étant disposés à l'intérieur du boîtier 21 de manière à être dirigés respectivement vers les repères 6A et 7A et selon une direction préférentiellement orthogonale à la plaque 5 et au disque indicateur 4. Ainsi, lors d'un déplacement angulaire du disque indicateur 4, en réponse à une variation de température, les signaux reçus par le ou les capteurs 23 vont varier alors que les signaux reçus par le ou les capteurs 22 demeurent constants. Cette variation va être analysée par une unité de calcul connectée aux capteurs optiques 22 et 23 de manière à déterminer précisément la position du disque indicateur 4 par rapport à la position de référence donnée par la plaque de verre 5. Ce type d'analyse n'a pas été détaillé dans la présente demande étant donné qu'elle ne constitue pas l'objet de l'invention et qu'elle fait partie des connaissances de l'homme du métier. On peut toutefois préciser qu'elle peut résulter par exemple du comptage des repères réfléchissants ou du déchiffrage d'un code numérique défini par les repères réfléchissants. Par ailleurs, pour améliorer la précision de la mesure, il peut être avantageux d'utiliser plusieurs capteurs 22 et 23, l'unité de calcul effectuant alors une interpolation des signaux reçus par ces capteurs.

Les capteurs optiques 22 et 23 utilisables dans le cadre de la présente invention seront de préférence choisis parmi les rupteurs photoélectriques à réflexion. Ils comporteront à cet effet un élément électroluminescent et un élément photorécepteur orientés selon une direction sensiblement orthogonale aux repères réfléchissants de manière à ce que l'élément photorécepteur capte la lumière réfléchie par les repères réfléchissants en réponse à l'envoi d'une lumière incidente issue de l'élément électroluminescent. Il sera avantageux d'utiliser comme élément électroluminescent une LED infrarouge et comme élément photorécepteur un photo transistor ou une photo diode. Le rupteur photoélectrique référencé GP2S24 et commercialisé par la société SHARP sera particulièrement adapté aux besoins de la présente invention.

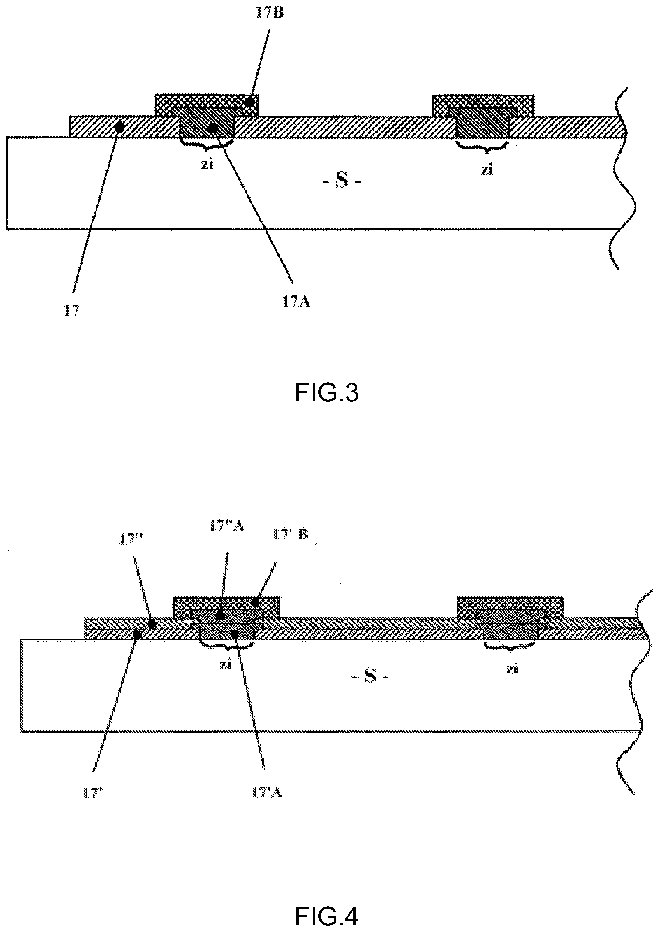

En relation avec les Figures 3 à 5, une description détaillée du procédé selon l'invention utilisé pour former les repères réfléchissants sur une surface S à marquer va être donnée.

La surface S est l'élément fixe du thermomètre 10, correspondant à la plaque de verre 5 de la Figure 1.

Par ailleurs, le procédé de l'invention n'est pas limité à cette application spécifique des thermomètres. En effet, tout type d'application pour laquelle une détection précise de la position de repères réfléchissants sur une surface est nécessaire pourra mettre en oeuvre le procédé de la présente invention.

En relation avec la Figure 3, le procédé selon l'invention comporte donc les étapes suivantes:
- dépôt par impression sur la surface S d'une première couche 17, dite couche masque, selon un premier motif constitué d'une bande pleine à l'intérieur duquel sont formées une série de zones zᵢ discrètes, régulièrement espacées, libres d'impression, lesdites zones zᵢ formant un second motif, ladite couche masque 17 étant sensiblement exempte de particules à haute réflectivité et possédant une couleur sensiblement homogène,
- dépôt par impression sur la surface S d'une seconde couche 17A, dite couche réfléchissante, selon un motif sensiblement identique au second motif, ladite couche réfléchissante 17A comprenant des particules à haute réflectivité et étant sensiblement exempte d'agents durcisseurs et de diluant, et de manière optionnelle,
- dépôt par impression sur la seconde couche 17A d'une troisième couche 17B, dite couche protectrice, selon un motif apte à couvrir totalement le second motif, ladite couche protectrice 17B comprenant de préférence des agents durcisseurs.

Le dépôt des différentes couches se fera de préférence par sérigraphie ou tampographie, la dernière étant préférentiellement utilisée pour les impressions automatiques de grandes quantités.

Pour éviter des problèmes d'impression entre chaque dépôt de couche, un séchage des couches fraîchement déposées pourra être réalisé avant le dépôt d'une autre couche.

La couche masque pourra être formée de tout type d'encre compatible avec l'impression sur du verre. A ce titre, il est envisageable d'utiliser des encres formées à partir d'une composition copolymère Polyester-PVC, notamment la référence TPC 180-NT commercialisée par la société TECA-PRINT AG. La couche masque possèdera une couleur sensiblement homogène sur toute sa surface de manière à faciliter sa détection par les capteurs optiques. De plus, un agent d'accrochage, par exemple de la série 700-RCA de Printcolor, pourra être additionné afin que l'encre adhère mieux à la surface.

Les particules possédant une haute réflectivité seront choisies de préférence parmi les particules métalliques et les feuilles métalliques, notamment à base d'aluminium. A cet effet, il sera avantageux d'utiliser des encres miroirs pour former la couche réfléchissante. Ces encres miroirs pourront notamment être choisies dans les séries 140-ME100/05 et 140-ME102/05 commercialisées par la société PRINTCOLOR.

Les agents durcisseurs utilisables pour former la couche protectrice 17B seront adaptés pour améliorer la résistance chimique et mécanique desdites couches réfléchissantes. A cet égard, il pourra être avantageux d'utiliser à la place d'un durcisseur un agent d'accrochage de la série 700-RCA commercialisés par la société PRINTCOLOR, rendant ainsi le temps d'utilisation de l'encre plus long.

Ainsi défini, le procédé selon l'invention permet de conférer à la couche réfléchissante 17A un pouvoir de réflexion accru, notamment du fait de l'élimination des agents durcisseurs et des agents diluants de la composition d'encre destinée à former la couche réfléchissante 17A. En effet, les agents durcisseurs, utilisés fréquemment dans les encres pour renforcer leur cohésion et leur résistance aux rayures, et les agents diluants ont le désavantage de diminuer le pouvoir de réflexion desdites encres. Pour résoudre ce problème, la Demanderesse a eu l'idée de ne pas utiliser d'agents durcisseurs et de diluants pour former la couche réfléchissante 17A et d'imprimer ladite couche sur une surface S protégée de l'extérieur, comme la face interne de la plaque de verre 5 de la Figure 1. Pour améliorer la cohésion et la protection de la couche réfléchissante 17A, il est toutefois possible d'ajouter une couche protectrice additionnelle 17B disposée de manière à couvrir totalement la couche 17A. Cette couche protectrice 17B n'aura pas d'impact négatif sur le pouvoir de réflexion de la couche 17A étant donné que la mesure de réflectance se fait à travers la surface S sensiblement transparente et non à travers la couche protectrice 17B.

Pour renforcer encore le contraste des différentes couches, et notamment le pouvoir de réflexion de la couche réfléchissante, la Demanderesse a constaté qu'il était avantageux de déposer une deuxième couche masque et une deuxième couche réfléchissante respectivement sur la première couche masque et la première couche réfléchissante. De fait, le procédé correspondant à cette variante, et représenté sur la Figure 4, comporte les étapes suivantes:
- dépôt par impression sur la surface S d'une première couche 17', dite couche masque, selon un premier motif constitué d'une bande pleine à l'intérieur duquel sont formées une série de zones zi discrètes, régulièrement espacées, libres d'impression, lesdites zones zi formant un second motif, ladite couche masque 17' étant sensiblement exempte de particules à haute réflectivité et possédant une couleur sensiblement homogène,
- dépôt par impression sur la surface S d'une seconde couche 17'A, dite couche réfléchissante, selon un motif sensiblement identique au second motif, ladite couche réfléchissante 17'A comprenant des particules à haute réflectivité et étant sensiblement exempte d'agents durcisseurs et de diluant,
- dépôt par impression sur la première couche masque 17' d'une deuxième couche masque 17" selon un motif sensiblement identique au premier motif, ladite deuxième couche masque 17" étant sensiblement exempte de particules à haute réflectivité et possédant une couleur sensiblement identique à la couleur de la première couche masque 17',
- dépôt par impression sur la première couche réfléchissante 17'A d'une deuxième couche réfléchissante 17"A selon un motif sensiblement identique au second motif, ladite deuxième couche réfléchissante 17"A comprenant des particules à haute réflectivité et étant sensiblement exempte d'agents durcisseurs et de diluant, et de manière optionnelle,
- dépôt par impression sur la deuxième couche réfléchissante 17"A d'une cinquième couche 17'B, dite couche protectrice, selon un motif apte à couvrir totalement le second motif, ladite cinquième couche 17'B comprenant de préférence des agents durcisseurs.

Comme vu précédemment, un séchage des couches fraîchement déposées pourra être réalisé avant le dépôt d'une autre couche.

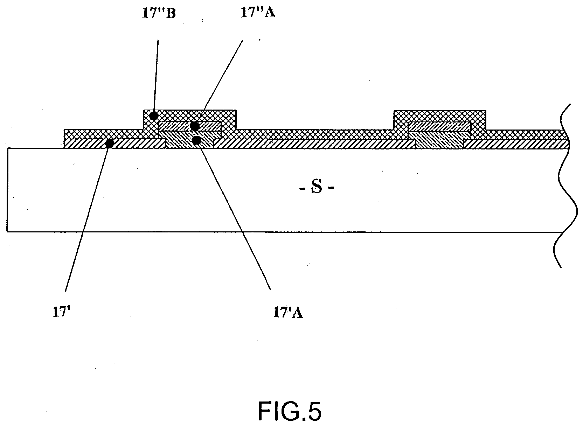

Dans la variante représentée à la Figure 5, la Demanderesse a voulu limiter le nombre de couches à déposer. Pour ce faire, par rapport à la variante précédente, elle a éliminé la deuxième couche masque pour la remplacer par une couche protectrice couvrant à la fois la première couche masque et la deuxième couche réfléchissante. De fait, le procédé correspondant à cette variante comporte les étapes suivantes:
- dépôt par impression sur la surface S d'une première couche 17', dite couche masque, selon un premier motif constitué d'une bande pleine à l'intérieur duquel sont formées une série de zones zi discrètes, régulièrement espacées, libres d'impression, lesdites zones zi formant un second motif, ladite couche masque 17' étant sensiblement exempte de particules à haute réflectivité et possédant une couleur sensiblement homogène,
- dépôt par impression sur la surface S d'une seconde couche 17'A, dite couche réfléchissante, selon un motif sensiblement identique au second motif, ladite couche réfléchissante 17'A comprenant des particules à haute réflectivité et étant sensiblement exempte d'agents durcisseurs et de diluant,
- dépôt par impression sur la première couche réfléchissante 17'A d'une deuxième couche réfléchissante 17"A selon un motif sensiblement identique au second motif, ladite deuxième couche réfléchissante 17"A comprenant des particules à haute réflectivité et étant sensiblement exempte d'agents durcisseurs et de diluant,
- dépôt par impression sur la couche masque 17' et sur la deuxième couche réfléchissante 17"A d'une quatrième couche 17"B, dite couche protectrice, selon un motif apte à couvrir totalement le premier et le second motif, ladite quatrième couche 17"B comprenant de préférence des agents durcisseurs.

## Revendications

1. Procédé de formation de repères destinés à être détectés par voie optique et en réflexion, comprenant les étapes suivantes:
a) dépôt par impression sur une surface (S) d'une première couche (17, 17'), dite couche masque, selon un premier motif constitué d'une bande pleine à l'intérieur duquel sont formées une série de zones (zi) discrètes, régulièrement espacées, libres d'impression, lesdites zones (zi) formant un second motif, ladite couche masque (17, 17') étant sensiblement exempte de particules à haute réflectivité et possédant une couleur sensiblement homogène,
b) dépôt par impression sur la surface (S) d'une seconde couche (17A, 17'A), dite couche réfléchissante, selon un motif sensiblement identique au second motif, ladite couche réfléchissante (17A, 17'A) comprenant des particules à haute réflectivité et étant exempte d'agents durcisseurs et de diluant.

2. Procédé selon la revendication 1, **caractérisé en ce qu'**il comprend l'étape supplémentaire de:
c) dépôt par impression sur la seconde couche (17A) d'une troisième couche (17B), dite couche protectrice, selon un motif apte à couvrir totalement le second motif, ladite couche protectrice (17B) comprenant de préférence des agents durcisseurs.

3. Procédé selon la revendication 1, **caractérisé en ce qu'**il comprend les étapes supplémentaires de :
a') dépôt par impression sur la première couche masque (17') d'une deuxième couche masque (17") selon un motif sensiblement identique au premier motif, ladite deuxième couche masque (17") étant sensiblement exempte de particules à haute réflectivité et possédant une couleur sensiblement identique à la couleur de la première couche masque (17'),
b') dépôt par impression sur la première couche réfléchissante (17'A) d'une deuxième couche réfléchissante (17"A) selon un motif sensiblement identique au second motif, ladite deuxième couche réfléchissante (17"A) comprenant des particules à haute réflectivité et étant exempte d'agents durcisseurs et de diluant.

4. Procédé selon la revendication 3, **caractérisé en ce qu'**il comprend l'étape supplémentaire de:
c') dépôt par impression sur la deuxième couche réfléchissante (17"A) d'une cinquième couche (17'B), dite couche protectrice, selon un motif apte à couvrir totalement le second motif, ladite cinquième couche (17'B) comprenant de préférence des agents durcisseurs.

5. Procédé selon la revendication 1, **caractérisé en ce qu'**il comprend les étapes supplémentaires de :
a") dépôt par impression sur la première couche réfléchissante (17'A) d'une deuxième couche réfléchissante (17"A) selon un motif sensiblement identique au second motif, ladite deuxième couche réfléchissante (17"A) comprenant des particules à haute réflectivité et étant exempte d'agents durcisseurs et de diluant,
b") dépôt par impression sur la couche masque (17') et sur la deuxième couche réfléchissante (17"A) d'une quatrième couche (17"B), dite couche protectrice, selon un motif apte à couvrir totalement le premier et le second motif, ladite quatrième couche (17"B) comprenant de préférence des agents durcisseurs.

6. Procédé selon l'une quelconque des revendications précédentes, **caractérisé en ce que** les particules à haute réflectivité sont choisies parmi les particules métalliques et les feuilles métalliques.

7. Procédé selon la revendication précédente, **caractérisé en ce que** les particules à haute réflectivité sont à base d'aluminium.

8. Procédé selon l'une quelconque des revendications précédentes, **caractérisé en ce que** les couches (17, 17', 17", 17A, 17'A, 17"A, 17B, 17'B, 17"B) sont déposées par sérigraphie.

9. Procédé selon l'une quelconque des revendications 1 à 7, **caractérisé en ce que** les couches (17, 17', 17", 17A, 17'A, 17"A, 17B, 17'B, 17"B) sont déposées par tampographie.

10. Procédé selon l'une quelconque des revendications précédentes, **caractérisé en ce qu'**il comporte une étape additionnelle de séchage des couches déposées (17, 17', 17", 17A, 17'A, 17"A, 17B, 17'B, 17"B) avant d'effectuer le dépôt d'une couche supplémentaire.

11. Procédé selon l'une quelconque des revendications précédentes, **caractérisé en ce que** la surface (S) est constituée d'un matériau à haute conductivité thermique.

12. Procédé selon la revendication précédente, **caractérisé en ce que** le matériau à haute conductivité thermique est choisi parmi l'aluminium, le cuivre et le verre.

13. Thermomètre (10) comprenant un boîtier (1) cylindrique logeant:
- un capteur de température (2), apte à se déformer sous l'effet de la température,
- un élément fixe (5) comportant une première série de repères réfléchissants (6A),
- un élément mobile (4) comportant une deuxième série de repères réfléchissants (7A), le déplacement dudit élément mobile (4) étant fonction des déformations dudit capteur de température (2),
**caractérisé en ce que** l'élément fixe (5) est constitué d'une plaque de verre (5) recouvrant une ouverture aménagée dans la paroi supérieure du boîtier (1) et **en ce que** la première série de repères réfléchissants (6A) est formée sur la face interne de la plaque de verre (5) en utilisant le procédé selon l'une quelconque des revendications 1 à 12.

14. Thermomètre (10) selon la revendication précédente, **caractérisé en ce que** l'élément mobile (5) est constitué d'un disque indicateur (4) et **en ce que** la deuxième série de repères réfléchissants (7A) est formée sur la face supérieure du disque indicateur (4) de manière à réduire l'écart vertical existant entre la première série de repères réfléchissants (6A) et la deuxième série de repères réfléchissants (7A).

## Patentansprüche

1. Verfahren zur Ausbildung von Markierungen, die dazu bestimmt sind, auf optischem Wege und durch Reflexion erkannt zu werden, die folgenden Schritte umfassend:
a) Aufbringen, durch Drucken auf eine Oberfläche (S), einer ersten Schicht (17, 17'), Maskenschicht genannt, gemäß einem ersten Muster, das aus einem massiven Streifen besteht, in dessen Innerem eine Reihe von diskreten Bereichen (zi) ausgebildet ist, die gleichmäßig beabstandet und nicht bedruckt sind, wobei diese Bereiche (zi) ein zweites Muster bilden, wobei die Maskenschicht (17, 17') im Wesentlichen frei von Partikeln mit hohem Reflexionsgrad ist und eine im Wesentlichen homogene Farbe besitzt,
b) Aufbringen, durch Drucken auf die Oberfläche (S), einer zweiten Schicht (17A, 17'A), reflektierende Schicht genannt, gemäß einem Muster, das im Wesentlichen mit dem zweiten Muster identisch ist, wobei die reflektierende Schicht (17A, 17'A) Partikel mit hohem Reflexionsgrad umfasst und frei von Härtungsmitteln und von Verdünner ist.

2. Verfahren nach Anspruch 1, **dadurch gekennzeichnet, dass** es den folgenden zusätzlichen Schritt umfasst:
c) Aufbringen, durch Drucken auf die zweite Schicht (17A), einer dritten Schicht (17B), Schutzschicht genannt, gemäß einem Muster, das geeignet ist, das zweite Muster vollständig zu bedecken, wobei die Schutzschicht (17B) vorzugsweise Härtungsmittel umfasst.

3. Verfahren nach Anspruch 1, **dadurch gekennzeichnet, dass** es die folgenden zusätzlichen Schritte umfasst:
a') Aufbringen, durch Drucken auf die erste Maskenschicht (17'), einer zweiten Maskenschicht (17") gemäß einem Muster, das im Wesentlichen mit dem ersten Muster identisch ist, wobei die zweite Maskenschicht (17") im Wesentlichen frei von Partikeln mit hohem Reflexionsgrad ist und eine Farbe besitzt, die im Wesentlichen mit der Farbe der ersten Maskenschicht (17') identisch ist,
b') Aufbringen, durch Drucken auf die erste reflektierende Schicht (17'A), einer zweiten reflektierenden Schicht (17"A) gemäß einem Muster, das im Wesentlichen mit dem zweiten Muster identisch ist, wobei die zweite reflektierende Schicht (17"A) Partikel mit hohem Reflexionsgrad umfasst und frei von Härtungsmitteln und von Verdünner ist.

4. Verfahren nach Anspruch 3, **dadurch gekennzeichnet, dass** es den folgenden zusätzlichen Schritt umfasst:
c') Aufbringen, durch Drucken auf die zweite reflektierende Schicht (17"A), einer fünften Schicht (17'B), Schutzschicht genannt, gemäß einem Muster, das geeignet ist, das zweite Muster vollständig zu bedecken, wobei die fünfte Schicht (17'B) vorzugsweise Härtungsmittel umfasst.

5. Verfahren nach Anspruch 1, **dadurch gekennzeichnet, dass** es die folgenden zusätzlichen Schritte umfasst:
a") Aufbringen, durch Drucken auf die erste reflektierende Schicht (17'A), einer zweiten reflektierenden Schicht (17"A) gemäß einem Muster, das im Wesentlichen mit dem zweiten Muster identisch ist, wobei die zweite reflektierende Schicht (17"A) Partikel mit hohem Reflexionsgrad umfasst und frei von Härtungsmitteln und von Verdünner ist,
b") Aufbringen, durch Drucken auf die Maskenschicht (17') und auf die zweite reflektierende Schicht (17"A), einer vierten Schicht (17"B), Schutzschicht genannt, gemäß einem Muster, das geeignet ist, das erste und das zweite Muster vollständig zu bedecken, wobei die vierte Schicht (17"B) vorzugsweise Härtungsmittel umfasst.

6. Verfahren nach einem der vorhergehenden Ansprüche, **dadurch gekennzeichnet, dass** die Partikel mit hohem Reflexionsgrad aus metallischen Partikeln und Metallfolien gewählt sind.

7. Verfahren nach dem vorhergehenden Anspruch, **dadurch gekennzeichnet, dass** die Partikel mit hohem Reflexionsgrad auf Aluminium basieren.

8. Verfahren nach einem der vorhergehenden Ansprüche, **dadurch gekennzeichnet, dass** die Schichten (17, 17', 17", 17A, 17'A, 17"A, 17B, 17'B, 17"B) durch Siebdruck aufgebracht werden.

9. Verfahren nach einem der Ansprüche 1 bis 7, **dadurch gekennzeichnet, dass** die Schichten (17, 17', 17", 17A, 17'A, 17"A, 17B, 17'B, 17"B) durch Tampondruck aufgebracht werden.

10. Verfahren nach einem der vorhergehenden Ansprüche, **dadurch gekennzeichnet, dass** es einen zusätzlichen Schritt der Trocknung der aufgebrachten Schichten (17, 17', 17", 17A, 17'A, 17"A, 17B, 17'B, 17"B) umfasst, bevor das Aufbringen einer zusätzlichen Schicht durchgeführt wird.

11. Verfahren nach einem der vorhergehenden Ansprüche, **dadurch gekennzeichnet, dass** die Oberfläche (S) aus einem Material mit hoher spezifischer Wärmeleitfähigkeit besteht.

12. Verfahren nach dem vorhergehenden Anspruch, **dadurch gekennzeichnet, dass** das Material mit hoher spezifischer Wärmeleitfähigkeit aus Aluminium, Kupfer und Glas ausgewählt ist.

13. Thermometer (10), welches ein zylindrisches Gehäuse (1) umfasst, welches aufnimmt:
- einen Temperatursensor (2), der geeignet ist, sich unter der Einwirkung der Temperatur zu verformen,
- ein feststehendes Element (5), das eine erste Reihe von reflektierenden Markierungen (6A) aufweist,
- ein bewegliches Element (4), das eine zweite Reihe von reflektierenden Markierungen (7A) aufweist, wobei die Verlagerung des beweglichen Elements (4) von den Verformungen des Temperatursensors (2) abhängt,
**dadurch gekennzeichnet, dass** das feststehende Element (5) aus einer Glasplatte (5) besteht, die eine Öffnung bedeckt, welche in der oberen Wand des Gehäuses (1) angeordnet ist, und dadurch, dass die erste Reihe von reflektierenden Markierungen (6A) auf der Innenseite der Glasplatte (5) unter Anwendung des Verfahrens nach einem der Ansprüche 1 bis 12 ausgebildet ist.

14. Thermometer (10) nach dem vorhergehenden Anspruch, **dadurch gekennzeichnet, dass** das bewegliche Element (5) aus einer Anzeigescheibe (4) besteht, und dadurch, dass die zweite Reihe von reflektierenden Markierungen (7A) auf der Oberseite der Anzeigescheibe (4) ausgebildet ist, um den vertikalen Abstand zu verringern, der zwischen der ersten Reihe von reflektierenden Markierungen (6A) und der zweiten Reihe von reflektierenden Markierungen (7A) vorhanden ist.

## Claims

1. Process for forming marks intended to be detected optically and in reflection, comprising the following steps:
a) depositing, by printing, on a surface (S), a first layer (17, 17') that is what is called a masking layer, in a first pattern consisting of a solid strip in the interior of which are formed a series of discrete, regularly spaced zones (zi) that are free of print, said zones (zi) forming a second pattern, said masking layer (17, 17') being substantially exempt of high-reflectivity particles and possessing a substantially uniform colour;
b) depositing, by printing, on the surface (S), a second layer (17A, 17'A) that is what is called a reflective layer, in a pattern substantially identical to the second pattern, said reflective layer (17A, 17'A) containing high-reflectivity particles and being free from hardening agents and diluent.

2. Process according to Claim 1, **characterized in that** it comprises the additional step of:
c) depositing, by printing, on the second layer (17A), a third layer (17B) that is what is called a protective layer, in a pattern capable of completely covering the second pattern, said protective layer (17B) preferably containing hardening agents.

3. Process according to Claim 1, **characterized in that** it comprises the additional steps of:
a') depositing, by printing, on the first masking layer (17'), a second masking layer (17") in a pattern substantially identical to the first pattern, said second masking layer (17") being substantially exempt of high-reflectivity particles and possessing a colour substantially identical to the colour of the first masking layer (17');
b') depositing, by printing, on the first reflective layer (17'A), a second reflective layer (17"A) in a pattern substantially identical to the second pattern, said second reflective layer (17"A) containing high-reflectivity particles and being exempt of hardening agents and diluent.

4. Process according to Claim 3, **characterized in that** it comprises the additional step of:
c') depositing, by printing, on the second reflective layer (17"A), a fifth layer (17'B) that is what is called a protective layer, in a pattern capable of completely covering the second pattern, said fifth layer (17'B) preferably containing hardening agents.

5. Process according to Claim 1, **characterized in that** it comprises the additional steps of:
a") depositing, by printing, on the first reflective layer (17'A), a second reflective layer (17"A) in a pattern that is substantially identical to the second pattern, said second reflective layer (17"A) containing high-reflectivity particles and being exempt from hardening agents and diluent;
b") depositing, by printing, on the masking layer (17') and on the second reflective layer (17"A), a fourth layer (17"B) that is what is called a protective layer, in a pattern capable of completely covering the first and second pattern, said fourth layer (17"B) preferably comprising hardening agents.

6. Process according to any one of the preceding claims, **characterized in that** the high-reflectivity particles are chosen from metal particles and metal foils.

7. Process according to the preceding claim, **characterized in that** the high-reflectivity particles are aluminium-based.

8. Process according to any one of the preceding claims, **characterized in that** the layers (17, 17', 17", 17A, 17'A, 17"A, 17B, 17'B, 17"B) are deposited by screen printing.

9. Process according to any one of Claims 1 to 7, **characterized in that** the layers (17, 17', 17", 17A, 17'A, 17"A, 17B, 17'B, 17"B) are deposited by pad printing.

10. Process according to any one of the preceding claims, **characterized in that** it includes an additional step of drying the deposited layers (17, 17', 17", 17A, 17'A, 17"A, 17B, 17'B, 17"B) before depositing an additional layer.

11. Process according to any one of the preceding claims, **characterized in that** the surface (S) is made of a material of high thermal conductivity.

12. Process according to the preceding claim, **characterized in that** the material of high thermal conductivity is chosen from aluminium, copper and glass.

13. Thermometer (10) comprising a cylindrical housing (1) enclosing:
- a temperature sensor (2) capable of deforming under the effect of temperature;
- a stationary element (5) including a first series of reflective marks (6A);
- a mobile element (4) including a second series of reflective marks (7A), the movement of said mobile element (4) depending on the deformation of said temperature sensor (2);
**characterized in that** the stationary element (5) consists of a glass plate (5) covering an aperture in the upper wall of the housing (1) and **in that** the first series of reflective marks (6A) is formed on the internal face of the glass plate (5) using the process according to any one of Claims 1 to 12.

14. Thermometer (10) according to the preceding claim, **characterized in that** the mobile element (5) consists of an indicator disc (4) and **in that** the second series of reflective marks (7A) is formed on the upper face of the indicator disc (4) so as to decrease the vertical separation between the first series of reflective marks (6A) and the second series of reflective marks (7A).
